(19) Europäisches Patentamt
European Patent Office
Office européen des brevets

(11) **EP 2 746 045 B1**

(12) **EUROPÄISCHE PATENTSCHRIFT**

(45) Veröffentlichungstag und Bekanntmachung des Hinweises auf die Patenterteilung:
**20.07.2016   Patentblatt 2016/29**

(51) Int Cl.:
***B32B 21/00*** (2006.01)

(21) Anmeldenummer: **13197495.8**

(22) Anmeldetag: **16.12.2013**

(54) **Sperrholzplatte**

Plywood sheet

Panneau de contreplaqué

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012   DE 202012105040 U**

(43) Veröffentlichungstag der Anmeldung:
**25.06.2014   Patentblatt 2014/26**

(73) Patentinhaber: **SWL-Tischlerplatten Betriebs-GmbH**
**33449 Langenberg (DE)**

(72) Erfinder: **Schonlau, Bernd**
**59555 Lippstadt (DE)**

(74) Vertreter: **Manske, Jörg et al**
**Fritz Patent- und Rechtsanwälte Partnerschaft mbB**
**Postfach 1580**
**59705 Arnsberg (DE)**

(56) Entgegenhaltungen:

| | |
|---|---|
| **DE-U1-202007 009 532** | **DE-U1-202009 011 386** |
| **US-A1- 2003 224 122** | **US-A1- 2004 251 446** |

EP 2 746 045 B1

**EP 2 746 045 B1**

**Beschreibung**

Sperrholzplatten zeichnen sich insbesondere dadurch aus, dass sie im Vergleich zu anderen Werkstoffen relativ leicht sind und selbst unter wechselnden klimatischen Bedingungen sehr formstabil und biegesteif sind. Ihre Einsatzmöglichkeiten sind damit sehr vielfältig. Dies trifft insbesondere auf so genannte Tischlerplatten zu, bei denen die Sperrholz-Mittellage aus einer Mehrzahl parallel zueinander ausgerichteter Holzstäbe oder Holzstäbchen, die miteinander verleimt sind, gebildet ist und zwei Deckschichten beidseitig quer zur Sperrholz-Mittellage aufgeleimt sind. Sie werden zum Beispiel im Möbelbau sowie im Messebau, Innenausbau, Schiffs-, Fahrzeug-, und Wohnwagenbau und im Waggon- und Schienenfahrzeugbau eingesetzt. Als nachteilig erweisen sich häufig die Eigenschaften derartiger Sperrholzplatten im Brandfall. Daher wurde in der DE 20 2009 011 386 U1 vorgeschlagen, zum Verleimen der Holzbestandteile der Sperrholz-Mittellage (Holzstäbe oder Holzstäbchen) und zum Verleimen der Deckschichten mit der Sperrholz-Mittellage einen speziellen blähgraphithaltigen Leim zu verwenden. Durch diese Maßnahme konnten die Eigenschaften von Sperrholzplatten im Brandfall wesentlich verbessert werden. Die Verwendung eines blähgraphithaltigen Leims zum Verleimen ist dabei stets erforderlich.

Aus der US 2003/224122 A1 ist es bekannt, die Oberflächen eines Holzsubstrats, das zum Beispiel eine Faserplatte sein kann, mit brandhemmenden Mitteln zu behandeln.

Die US 2004/0251446 A1 offenbart eine wässrige, feuerbeständige Lösung, die unter anderem Phosphat enthält und zur Behandlung einer Faserplatte verwendet werden kann.

Die DE 20 2007 009 532 U1 offenbart eine Grobspanplatte (OSB-Platte) mit zwei damit verklebten Furnierschichten, die mit einem die Brandresistenz erhöhenden Medium derart getränkt sind, dass die Anforderungen einer erhöhten Brandresistenz gemäß DIN 5510 erfüllt sind.

Der vorliegenden Erfindung liegt die Aufgabe zu Grunde, eine alternative Ausführungsform einer Sperrholzplatte mit verbesserten Eigenschaften im Brandfall anzugeben.

Die Lösung dieser Aufgabe liefert eine Sperrholzplatte der eingangs genannten Art mit den Merkmalen des kennzeichnenden Teils des Anspruchs 1. Die Unteransprüche betreffen vorteilhafte Weiterbildungen der Erfindung.

Eine erfindungsgemäße Sperrholzplatte zeichnet sich dadurch aus, dass jede der beiden Deckschichten mindestens eine mit brandhemmenden Mitteln behandelte Spanplatte oder Faserplatte, insbesondere hochdichte Faserplatte (HDF-Platte), oder ein mit brandhemmenden Mitteln behandeltes Furnier umfasst. Überraschend hat es sich gezeigt, dass durch diese Maßnahme eine schwer entflammbare Sperrholzplatte erhalten werden kann, bei der zum Verleimen der Holzbestandteile der Sperrholz-Mittellage und zum Aufleimen der beiden Deckschichten ein herkömmlicher, für die Herstellung von Sperrholzplatten, die keine besonderen brandhemmenden Eigenschaften aufweisen, einsetzbarer Leim verwendet werden kann. Ein spezieller Leim, der die Eigenschaften der Sperrholzplatte im Brandfall verbessert, ist also mit anderen Worten nicht zwingend erforderlich.

Erfindungsgemäß ist ferner vorgesehen, dass die brandhemmenden Mittel Phosphate und/oder Graphite und/oder Salze und/oder Phosphorsäure-Esther enthalten. Deren Zusammensetzung und Konzentration sind gewählt, dass sie den Spanplatten, welche zumindest einen Teil der beiden Deckschichten bilden, besonders vorteilhafte brandhemmende Eigenschaften zur Verfügung stellen können. Dadurch können den Spanplatten im Ergebnis gute brandhemmende Eigenschaften zur Verfügung gestellt werden.

In einer besonders bevorzugten Ausführungsform kann vorgesehen sein, dass die Spanplatten eine Dicke von 2 mm bis 8 mm aufweisen.

Mit den hier vorgestellten Maßnahmen ist es überraschend möglich, eine schwerentflammbare Sperrholzplatte nach der Norm DIN EN 13501 (Teil 1, 2007-05) in der Klasse B - S1, d0 zu erhalten.

In einer bevorzugten Ausführungsform wird vorgeschlagen, dass die Sperrholzplatte eine Mehrzahl parallel zueinander ausgerichteter Holzstäbe oder Holzstäbchen umfasst, die miteinander verleimt sind. Dadurch wird eine Tischlerplatte mit verbesserten Eigenschaften im Brandfall geschaffen.

Um die Eigenschaften der Sperrholzplatte im Brandfall noch weiter zu verbessern, kann in einer weiteren vorteilhaften Ausführungsform vorgesehen sein, dass der Leim, mittels dessen die Holzkomponenten (insbesondere die Holzstäbe oder Holzstäbchen) der Sperrholz-Mittellage miteinander verleimt sind und/oder die die beiden Spanplatten oder Faserplatten oder Furniere auf die Sperrholz-Mittellage aufgeleimt sind, einen Blähgraphitanteil aufweist. Wie in der DE 20 2009 011 386 U1 beschrieben, hat es sich gezeigt, dass sich durch die Verwendung eines blähgrahithaltigen Leims die Eigenschaften der Sperrholzplatte im Brandfall erheblich verbessern lassen. Im Brandfall dehnt sich das Blähgraphit im Leim aus. Durch die Expansion des Blähgraphits bildet sich eine sehr große Oberfläche, die eine schnelle Oxidation des Kohlenstoffs ermöglicht. Dadurch wird der Umgebungsluft der Sauerstoff entzogen. Die Umgebungsluft wird somit inertisiert und wirkt dann gewissermaßen als Löschmittel gegen den Brand und erstickt ihn. Insgesamt kann durch die Verwendung des Blähgraphits im Leim die Brandausweitung verlangsamt oder auch ganz eingedämmt werden, so dass insbesondere der Bildung toxischer Gase und Rauch wirksam entgegengewirkt werden kann. Somit können die Eigenschaften der Sperrholzplatte im Brandfall bei dieser Ausführungsform noch weiter verbessert werden. Um im Brandfall besonders vorteilhafte Eigenschaften der Sperrholzplatte zu erhalten, wird dem Leim vorzugsweise Blähgraphit zugesetzt, der eine möglichst niedrige Starttemperatur von etwa 150° C aufweist.

Vorzugsweise kann der Massenanteil ω der Blähgraphitkomponente ω = $m_{Blähgraphit} : (m_{Blähgraphit} + m_{Leim})$ zwischen 9/100 und 1/3 liegen, wobei $m_{Blähgraphit}$ die Masse der Blähgraphitkomponente ist und $m_{Leim}$ die Masse der Leimkomponente ist. Insbesondere kann der Massenanteil ω der Blähgraphitkomponente 0,2 bis 0,3, vorzugsweise 0,23 bis 0,25, betragen. Es hat sich gezeigt, dass durch diese Maßnahme in besonders vorteilhafter Weise eine gute Verarbeitbarkeit des Leim-Blähgraphit-Gemischs zum Verleimen der Holzkomponenten, insbesondere der Holzstäbe beziehungsweise Holzstäbchen, der Sperrholz-Mittellage miteinander sowie der Spanplatten oder Faserplatten oder Furniere mit der Sperrholz-Mittellage erreicht werden.

Die Holzstäbe der Sperrholz-Mittellage, die vorzugsweise eine Breite von etwa 20 mm bis etwa 50 mm aufweisen, beziehungsweise (im Falle einer Stäbchensperrholzplatte) die Holzstäbchen der Sperrholz-Mittellage bestehen vorzugsweise aus Fichtenholz, Kiefernholz, Pappelholz, Tannenholz (oder anderen Nadelhölzern) oder aus Überseehölzern (Fromager, Albasia, Paulownia, Okoume, Gabun, Fuma, Balsa etc).

Bei der Herstellung von Holzstäbchen werden die Holzstämme zunächst geschält. Dadurch werden Schälfurnierstreifen erhalten, die vorzugsweise eine Dicke von etwa 1,5 bis etwa 8,0mm, insbesondere eine Dicke von etwa 1,5 mm bis etwa 6,5 mm, haben. Besonders vorteilhaft ist es, wenn die Schälfurnierstreifen eine maximale Dicke von etwa 3 mm haben. Mehrere Lagen dieser Schälfurnierstreifen werden anschließend miteinander zu Platten verleimt. Diese Platten werden danach orthogonal zur Richtung der Schälfurnierlagen in der gewünschten Dicke der Sperrholz-Mittellage aufgetrennt. Auf diese Weise werden Teilblöcke aus den Platten erhalten, die zur Bildung der Sperrholz-Mittellage der Sperrholzplatte miteinander verleimt werden. Anschließend werden die Deckschichten beidseitig quer zur Sperrholz-Mittellage aufgeleimt. Die auf diese Weise hergestellte Sperrholzplatte kann dann weiterverarbeitet werden

Um der Sperrholzplatte ein ansprechendes optisches Erscheinungsbild zu verleihen, ist in einer bevorzugten Ausführungsform vorgesehen, dass zumindest eine der Deckschichten eine Dekorschicht umfasst, die mit einer Außenfläche der Spanplatte oder der Faserplatte oder des Furniers verleimt ist. Zum Verleimen kann wiederum ein herkömmlicher, nicht auf besondere Eigenschaften im Brandfall optimierter Leim verwendet werden, wie er auch für die Herstellung von Sperrholzplatten ohne verbesserte Eigenschaften im Brandfall verwendet wird. Ein blähgraphithaltiger Leim kann zu diesem Zweck ebenfalls verwendet werden. Ganz allgemein kann die Dekorschicht zum Beispiel aus einem Holzwerkstoff, aus Papier oder aus Kunststoff hergestellt sein. Die Dekorschicht kann insbesondere ein Dekorfurnier aus einem Holzwerkstoff, ein Dekorpapier oder ein Dekorlaminat oder eine Melaminschicht sein.

Weitere Merkmale und Vorteile der vorliegenden Erfindung werden deutlich anhand der nachfolgenden Beschreibung eines bevorzugten Ausführungsbeispiels unter Bezugnahme auf die beiliegende Abbildung. Darin zeigt

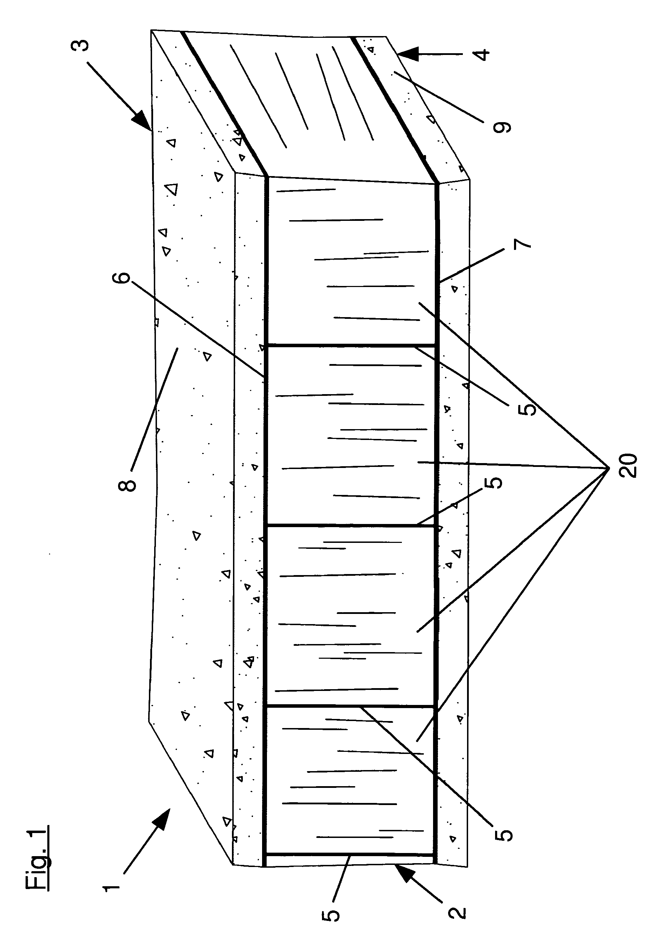

Fig. 1     eine perspektivische Ansicht eines Teils einer Sperrholzplatte, die gemäß einem bevorzugten Ausführungsbeispiel der vorliegenden Erfindung ausgeführt ist.

Eine Sperrholzplatte 1, die gemäß einem bevorzugten Ausführungsbeispiel der vorliegenden Erfindung ausgeführt ist und vorliegend eine so genannte Stabsperrholzplatte ist, umfasst eine Sperrholz-Mittellage 2 aus einer Mehrzahl parallel zueinander ausgerichteter, Holzstäbe 20, die hochkant zur Ebene der Sperrholzplatte 1 orientiert sind. Benachbarte Holzstäbe 20 sind jeweils unter Bildung einer Leimfuge 5 miteinander verleimt, um dadurch einen stabilen Sperrholz-Mittellagenverbund zu bilden. Die Sperrholzplatte 1 umfasst ferner eine erste Deckschicht 3 und eine zweite Deckschicht 4, die auf den beiden gegenüberliegenden Seiten der Sperrholz-Mittellage 2 angeordnet sind und sich in deren Querrichtung erstrecken. Die beiden Deckschichten 3, 4 sind jeweils unter Bildung einer Leimfuge 6, 7 mit den betreffenden Seiten der Sperrholz-Mittellage 2 miteinander verleimt. Die Holzstäbe 20 der Sperrholz-Mittellage 2, die typischerweise eine Breite von etwa 20 mm bis etwa 50 mm aufweisen, bestehen vorzugsweise aus Fichtenholz, Kiefernholz, Pappelholz, Tannenholz (oder anderen Nadelhölzern) oder aus Überseehölzern (Fromager, Albasia, Paulownia, Okoume, Gabun, Fuma, Balsa etc).

Jede der beiden Deckschichten 3, 4 weist vorliegend eine Spanplatte 8, 9 auf, die eine Stärke von etwa 2 mm bis etwa 8 mm aufweist und mit Brandhemmungsmitteln behandelt ist, so dass sie schwer entflammbar ist. Die Brandhemmungsmittel, mit denen die beiden Spanplatten 8, 9 behandelt sind, können vorzugsweise Phosphate und/oder Graphite und/oder Salze und/oder Phosphorsäure-Esther enthalten, deren Zusammensetzung und Konzentration so gewählt sind, dass sie den Spanplatten 8, 9, welche zumindest einen Teil der beiden Deckschichten 3, 4 bilden, besonders vorteilhafte brandhemmende Eigenschaften zur Verfügung stellen können.

Überraschend hat es sich gezeigt, dass durch die Verwendung der mit Brandhemmungsmitteln behandelten Spanplatten 8, 9 eine schwer entflammbare Sperrholzplatte 1 nach der Norm DIN EN 13501 (Teil 1, 2007-05) in der Klasse B - S1, d0 erhalten werden kann, ohne dass es erforderlich ist, ein besonderes Augenmerk auf die Brandeigenschaften der Sperrholz-Mittellage 2 und des zum Verleimen verwendeten Leims zu richten. So kann zum Verleimen der Holzstäbe 20 der Sperrholz-Mittellage 2 und der Spanplatten 8, 9 mit der Sperrholz-Mittellage 2 ein herkömmlicher Leim verwendet werden, wie er auch für die Herstellung von Sperrholzplatten verwendet wird, welche nicht als schwer entflammbar gemäß der vorstehend angeführten Norm angesehen werden können. In Fig. 1 ist zwischen benachbarten Holzstäben 20 der Sperrholz-Mittellage 2 jeweils eine entsprechende Leimfuge 5 zu erkennen. Die entsprechenden Leimfugen 6, 7 zwischen den beiden Deckschichten 3, 4 und der Sperrholz-Mittellage 2 sind ebenfalls in Fig. 1 zu erkennen. Der Leim, der zum Verleimen verwendet wird, kann zum Beispiel ein herkömmlicher Melaminharzleim sein.

Um die Eigenschaften der Sperrholzplatte 1 im Brandfall weiter zu verbessern, kann der für das Verleimen verwendete Leim vorzugsweise einen Blähgraphitanteil aufweisen. Der Massenanteil ω der Blähgraphitkomponente, also die relative Masse dieser Komponente in Bezug auf die Gesamtmasse des Stoffgemischs, das aus der Leimkomponente und der Blähgraphitkomponente gebildet wird, ist wie folgt definiert:

$$\omega = m_{Blähgraphit} : (m_{Blähgraphit} + m_{Leim})$$

wobei $m_{Blähgraphit}$ die Masse der Blähgraphitkomponente ist und $m_{Leim}$ die Masse der Leimkomponente ist.

Vorzugsweise liegt der Massenanteil ω der Blähgraphitkomponente zwischen 9/100 und 1/3. Besonders vorteilhaft ist ein Massenanteil ω zwischen 0,2 und 0,3, insbesondere zwischen 0,23 und 0,25, um eine gute Verarbeitbarkeit des Leim-Blähgraphit-Stoffgemischs zu gewährleisten. Wenn zum Beispiel ein Blähgraphit-Leim-Gemisch zum Verleimen der Holzstäbe 20 der Sperrholz-Mittellage 2 und der Spanplatten 8, 9 angesetzt wird, bei dem 50 kg Leimmasse verwendet wird, so werden dieser Leimmasse zwischen 5 kg und 25 kg, vorzugsweise etwa 15 kg (30% bezogen auf 50 kg Leim, ω=0,23077), Blähgraphit zugesetzt. Um im Brandfall besonders vorteilhafte Eigenschaften zu erhalten, wird dem Leim vorzugsweise Blähgraphit zugesetzt, der eine möglichst niedrige Starttemperatur von etwa 150° C aufweist.

Im Brandfall expandiert das Blähgraphit im Leim, der zum Verleimen der Holzstäbe 20 der Sperrholz-Mittellage 2 untereinander und zum Aufleimen der Spanplatten 8, 9 verwendet wurde. Durch die Expansion des Blähgraphits bildet sich eine sehr große Oberfläche, die eine schnelle Oxidation des Kohlenstoffs ermöglicht. Dadurch wird der Umgebungsluft der Sauerstoff entzogen. Die Umgebungsluft wird somit inertisiert und wirkt dann gewissermaßen als Löschmittel gegen den Brand und erstickt ihn. Insgesamt kann durch die Verwendung des Blähgraphits die Brandausweitung wesentlich verlangsamt oder auch ganz eingedämmt werden, so dass insbesondere der Bildung toxischer Gase und Rauch wirksam entgegengewirkt werden kann.

Um der hier vorgestellten Sperrholzplatte 1 ein ansprechendes optisches Erscheinungsbild zu verleihen, kann zumindest eine der beiden Deckschichten 3, 4 eine hier nicht explizit dargestellte Dekorschicht umfassen, die mit einer Außenfläche der Spanplatte 8, 9 verleimt ist. Zum Verleimen kann wiederum herkömmlicher, nicht auf besonders gute Eigenschaften im Brandfall optimierter Leim verwendet werden, wie er für die Herstellung von Sperrholzplatten ohne verbesserte Eigenschaften im Brandfall verwendet wird. Ein blähgraphithaltiger Leim ist ebenfalls verwendbar. Ganz allgemein kann die Dekorschicht zum Beispiel aus einem Holzwerkstoff, aus Papier oder aus Kunststoff hergestellt sein. Die Dekorschicht kann insbesondere ein Dekorfurnier aus einem Holzwerkstoff, ein Dekorpapier oder ein Dekorlaminat oder eine Melaminschicht sein.

Das vorstehend skizzierte grundlegende Konzept zur Verbesserung der Brandeigenschaften kann auch auf so genannte Stäbchensperrholzplatten übertragen werden, bei denen die Sperrholz-Mittellage 2 eine Vielzahl miteinander verleimter Holzstäbchen aus Schälfurnierstreifen umfasst, die eine Dicke von etwa 1,5 mm bis etwa 8 mm, insbesondere eine Dicke von etwa 1,5 mm bis etwa 6,5 mm, haben. Jede der beiden Deckschichten 3, 4 weist wiederum eine Spanplatte 8, 9 auf, die eine Stärke von etwa 2 mm bis etwa 8 mm aufweist und mit Brandhemmungsmitteln behandelt ist, so dass sie schwer entflammbar ist. Dadurch kann ebenfalls eine schwer entflammbare Sperrholzplatte 1 (Stäbchensperrholzplatte) nach der Norm DIN EN 13501 (Teil 1, 2007-05) in der Klasse B - S1, d0 erhalten werden.

Das hier vorgestellte Konzept ist ganz allgemein auf Sperrholzplatten aller Art anwendbar und somit nicht explizit auf die vorstehend beschriebenen Stabsperrholzplatten und Stäbchensperrholzplatten beschränkt.

In einer alternativen Ausführungsform besteht auch die Möglichkeit, dass die Deckschichten 3, 4 keine Spanplatten 8, 9 der oben beschriebenen Art, sondern mit den brandhemmenden Mitteln behandelte, Faserplatten, insbesondere hochdichte Faserplatten (HDF-Platten), oder mit den brandhemmenden Mitteln behandelte Furniere umfassen. Dadurch ist es ebenfalls möglich, Sperrholzplatten (zum Beispiel Stabsperrholzplatten oder Stäbchensperrholzplatten) mit den hier beschriebenen verbesserten Eigenschaften im Brandfall zu erhalten.

Auch eine Kombination in der Weise ist möglich, dass eine der beiden Deckschichten 3, 4 eine mit den brandhemmenden Mitteln behandelte Spanplatte 8, 9 und die andere der beiden Deckschichten 3, 4 eine mit den brandhemmenden Mitteln behandelte, Faserplatte oder ein mit den brandhemmenden Mitteln behandeltes Furnier umfasst. Auch eine Kombination von Furnier und Faserplatte, die mit den brandhemmenden Mitteln behandelt sind, ist möglich

**Patentansprüche**

1. Sperrholzplatte (1), umfassend eine Sperrholz-Mittellage (2), und zwei Deckschichten (3, 4), die beidseitig auf die Sperrholz-Mittellage (2) aufgeleimt sind, **dadurch gekennzeichnet, dass** jede der beiden Deckschichten (3, 4) mindestens eine mit brandhemmenden Mitteln behandelte Spanplatte (8, 9) oder Faserplatte, insbesondere hochdichte Faserplatte, oder ein mit brandhemmenden Mitteln behandeltes Furnier umfasst, wobei die brandhemmenden Mittel Phosphate und/oder Graphite und/oder Salze und/oder Phosphorsäure-Esther enthalten.

2. Sperrholzplatte (1) nach Anspruch 1, **dadurch gekennzeichnet, dass** die Spanplatten (8, 9) eine Dicke von 2 mm bis 8 mm aufweisen.

3. Sperrholzplatte (1) nach einem der Ansprüche 1 oder 2, **dadurch gekennzeichnet, dass** die Sperrholzplatte eine Mehrzahl parallel zueinander ausgerichteter Holzstäbe (20) oder Holzstäbchen umfasst, die miteinander verleimt sind.

4. Sperrholzplatte (1) nach einem der Ansprüche 1 bis 3, **dadurch gekennzeichnet, dass** der Leim, mittels dessen die Holzbestandteile der Sperrholz-Mittellage (2) miteinander verleimt sind und/oder die beiden Spanplatten (8, 9) oder Faserplatten oder Furniere auf die Sperrholz-Mittellage (2) aufgeleimt sind, einen Blähgraphitanteil aufweist.

5. Sperrholzplatte (1) nach Anspruch 4, **dadurch gekennzeichnet, dass** der Massenanteil $\omega$ der Blähgraphitkomponente $\omega = m_{Blähgraphit} : (m_{Blähgraphit} + m_{Leim})$ zwischen 9/100 und 1/3 liegt, wobei $m_{Blähgraphit}$ die Masse der Blähgraphitkomponente ist und $m_{Leim}$ die Masse der Leimkomponente ist.

6. Sperrholzplatte (1) nach Anspruch 5, **dadurch gekennzeichnet, dass** der Massenanteil $\omega$ der Blähgraphitkomponente 0,2 bis 0,3, vorzugsweise 0,23 bis 0,24, beträgt.

7. Sperrholzplatte (1) nach einem der Ansprüche 3 bis 6 **dadurch gekennzeichnet, dass** die Holzstäbchen aus Schälfurnierstreifen gebildet sind, die eine Dicke von etwa 1,5 mm bis etwa 8 mm, insbesondere eine Dicke von etwa 1,5 mm bis etwa 6,5 mm, haben.

8. Sperrholzplatte (1) nach Anspruch 7, **dadurch gekennzeichnet, dass** die Schälfurnierstreifen eine maximale Dicke von 3 mm haben.

9. Sperrholzplatte nach einem der Ansprüche 1 bis 8, **dadurch gekennzeichnet, dass** zumindest eine der Deckschichten (3, 4) eine Dekorschicht umfasst, die mit einer Außenfläche der Spanplatte (8, 9) oder Faserplatte oder des Furniers verleimt ist.

10. Sperrholzplatte nach Anspruch 9, **dadurch gekennzeichnet, dass** die Dekorschicht aus einem Holzwerkstoff, aus Papier oder aus Kunststoff hergestellt ist.

11. Sperrholzplatte nach Anspruch 9 oder 10, **dadurch gekennzeichnet, dass** die Dekorschicht eine Melaminschicht umfasst.

## Claims

1. Plywood sheet (1) comprising a plywood middle ply (2) and two outer layers (3, 4) glued to the two sides of the plywood middle ply (2), **characterized in that** each of the two outer layers (3, 4) comprises at least one chipboard sheet (8, 9) or fibreboard sheet, in particular high-density fibreboard sheet, treated with fire-retardant agents, or comprises a veneer treated with fire-retardant agents, where the fire-retardant agents comprise phosphates and/or graphites and/or salts and/or phosphoric esters.

2. Plywood sheet (1) according to Claim 1, **characterized in that** the thickness of the chipboard sheets (8, 9) is from 2 mm to 8 mm.

3. Plywood sheet (1) according to Claim 1 or 2, **characterized in that** the plywood sheet comprises a plurality of mutually parallel-orientated wood spars (20) or wood slivers glued to one another.

4. Plywood sheet (1) according to any of Claims 1 to 3, **characterized in that** the glue by means of which the wood constituents of the plywood middle ply (2) have been glued to one another and/or the two chipboard sheets (8, 9) or fibreboard sheets or veneers have been glued to the plywood middle ply (2) comprises expandable graphite.

**5.** Plywood sheet (1) according to Claim 4, **characterized in that** the mass fraction $\omega$ of the expandable graphite component $\omega = m_{\text{Blähgraphit}} : (m_{\text{Blähgraphit}} + m_{\text{Leim}})$ is from 9/100 to 1/3, where $m_{\text{Blähgraphit}}$ is the mass of the expandable graphite component and $m_{\text{Leim}}$ is the mass of the glue component.

**6.** Plywood sheet (1) according to Claim 5, **characterized in that** the mass fraction $\omega$ of the expandable graphite component is from 0.2 to 0.3, preferably from 0.23 to 0.24.

**7.** Plywood sheet (1) according to any of Claims 3 to 6, **characterized in that** the wood slivers are composed of rotary-cut veneer strips of thickness from about 1.5 mm to about 8 mm, in particular of thickness from about 1.5 mm to about 6.5 mm.

**8.** Plywood sheet (1) according to Claim 7, **characterized in that** the maximal thickness of the rotary-cut veneer strips is 3 mm.

**9.** Plywood sheet according to any of Claims 1 to 8, **characterized in that** at least one of the outer layers (3, 4) comprises a decorative layer glued to an external area of the chipboard sheet (8, 9) or fibreboard sheet or of the veneer.

**10.** Plywood sheet according to Claim 9, **characterized in that** the decorative layer has been produced from a wood-based material, from paper or from plastic.

**11.** Plywood sheet according to Claim 9 or 10, **characterized in that** the decorative layer comprises a melamine layer.

**Revendications**

**1.** Panneau de contreplaqué (1), comprenant une couche centrale en contreplaqué (2) et deux couches de surface (3, 4), qui sont collées des deux côtés sur la couche centrale en contreplaqué (2), **caractérisé en ce que** chacune des deux couches de surface (3, 4) comprend au moins un panneau d'aggloméré (8, 9) ou un panneau de fibres, notamment un panneau de fibres haute densité, traité avec des agents ignifuges ou un placage traité avec des agents ignifuges, les agents ignifuges contenant des phosphates et/ou des graphites et/ou des sels et/ou des esters de l'acide phosphorique.

**2.** Panneau de contreplaqué (1) selon la revendication 1, **caractérisé en ce que** les panneaux d'aggloméré (8, 9) présentent une épaisseur de 2 mm à 8 mm.

**3.** Panneau de contreplaqué (1) selon l'une quelconque des revendications 1 ou 2, **caractérisé en ce que** le panneau de contreplaqué comprend une pluralité de barres en bois ou de bâtonnets en bois parallèles les uns aux autres (20), qui sont collés les uns avec les autres.

**4.** Panneau de contreplaqué (1) selon l'une quelconque des revendications 1 à 3, **caractérisé en ce que** la colle au moyen de laquelle les constituants en bois de la couche centrale en contreplaqué (2) sont collés les uns avec les autres et/ou les deux panneaux d'aggloméré (8, 9) ou les panneaux de fibres ou les placages sont collés sur la couches centrale en contreplaqué (2), comprend une proportion de graphite expansé.

**5.** Panneau de contreplaqué (1) selon la revendication 4, **caractérisé en ce que** la proportion en masse $\omega$ du composant graphite expansé $\omega = m_{\text{Blähgraphit}} : (m_{\text{Blähgraphit}} + m_{\text{Leim}})$ est comprise entre 9/100 et 1/3, $m_{\text{Blähgraphit}}$ étant la masse du composant graphite expansé et $m_{\text{Leim}}$ étant la masse du composant colle.

**6.** Panneau de contreplaqué (1) selon la revendication 5, **caractérisé en ce que** la proportion en masse $\omega$ du composant graphite expansé est de 0,2 à 0,3, de préférence de 0,23 à 0,24.

**7.** Panneau de contreplaqué (1) selon l'une quelconque des revendications 3 à 6, **caractérisé en ce que** les bâtonnets de bois sont formés par des bandes de placage déroulé qui ont une épaisseur d'environ 1,5 mm à environ 8 mm, notamment une épaisseur d'environ 1,5 mm à environ 6,5 mm.

**8.** Panneau de contreplaqué (1) selon la revendication 7, **caractérisé en ce que** les bandes de placage déroulé ont une épaisseur maximale de 3 mm.

9. Panneau de contreplaqué selon l'une quelconque des revendications 1 à 8, **caractérisé en ce qu'**au moins une des couches de surface (3, 4) comprend une couche décorative qui est collée avec une surface extérieure du panneau d'aggloméré (8, 9) ou du panneau de fibres ou du placage.

10. Panneau de contreplaqué selon la revendication 9, **caractérisé en ce que** la couche décorative est fabriquée en un matériau en bois, en papier ou en plastique.

11. Panneau de contreplaqué selon la revendication 9 ou 10, **caractérisé en ce que** la couche décorative comprend une couche de mélamine.

EP 2 746 045 B1

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202009011386 U1
- US 2003224122 A1
- US 20040251446 A1
- DE 202007009532 U1